# EUROPÄISCHE PATENTSCHRIFT

(11) **EP 0 377 088 B1**
(45) Veröffentlichungstag und Bekanntmachung des Hinweises auf die Patenterteilung: **03.11.1993**
(21) Anmeldenummer: 89119224.7
(22) Anmeldetag: 17.10.1989
(51) Int. Cl.: B01F 5/04

(54) **Verfahren zum Strahlvermischen von Gasen**
Method for mixing gases by means of jets
Procédé pour mélanger des gaz en utilisant des jets

(30) Priorität: 23.12.1988 DE 3843543
(43) Veröffentlichungstag der Anmeldung: 11.07.1990
(73) Patentinhaber: THYSSENGAS GMBH, 47166 Duisburg (DE); Gaswärme-Institut e.V., D-45342 Essen (DE)
(72) Erfinder: Klocke, Bernhard, Dipl.-Ing., D-4630 Bochum (DE); Simon, Horst, Dipl.-Ing., D-4300 Essen-Kettwig (DE)
(74) Vertreter: König, Reimar, Dr.-Ing.

(56) Entgegenhaltungen:
- BE-A- 682 718
- DE-A- 2 031 016
- FR-A- 1 373 007
- FR-A- 2 222 124
- FR-A- 2 260 265
- NL-A- 7 116 127
- US-A- 3 409 274
- PATENT ABSTRACTS OF JAPAN; p. 2683 M 76; & JP-A-51 150 160 (HITACHI PLANT KENSETSU.K.K.) 23-12-1976

## Beschreibung

Die Erfindung bezieht sich auf ein Verfahren zum kontinuierlichen Strahlvermischen mindestens zweier fluider Medien, bei dem in einen Hauptgasstrom ein Nebengasstrom eingestrahlt wird.

Die Geschwindigkeit und die Vollständigkeit chemischer Reaktionen hängen in starkem Maße davon ab, ob und inwieweit es gelingt, die Reaktionspartner miteinander zu vermischen. Optimale Reaktionsbedingungen liegen vor, wenn die Reaktionspartner ein homogenes Gemisch bilden und die Diffusionswege demgemäß ein Minimum erreichen. In Rohrleitungen, vor allem aber in Rauchgaskanälen von Großkesseln, mit mehreren m² Querschnitt, beispielsweise 3 m² bis 50 m², bei denen in einen Hauptstrom senkrecht zur Strömungsrichtung ein Nebenstrom mit einer Eindringtiefe normalerweise bis zum Zentrum des Hauptstroms eingespeist wird, läßt sich dieser Idealzustand mit vertretbarem Aufwand zumeist nicht erreichen; bekannte Lösungen sind hier Rohrregister in der Strömung oder in der Wandung installierte Injektordüsen, die aber alle ein, über den Rohrquerschnitt gesehen, je nach Einstrahlbedingungen mehr oder minder ausgeprägtes Konzentrationsprofil mit einer Konzentrationsspitze im Rohrzentrum einstellen.

Ein verhältnismäßig gutes Mischungsergebnis läßt sich mit Hilfe von Injektoren erreichen, bei denen der eine Mischungspartner über eine zentrische Düse und der andere über den Ringspalt zwischen der zentrischen Düse und dem die Düse konzentrisch umgebenden Rohr eingeblasen wird. Ein Nachteil der Verwendung derartiger Injektoren besteht jedoch darin, daß sie entsprechende Einbauten im Bereich der Mischstrecke erfordern, was insbesondere bei heißen und/oder korrodierenden sowie staubbeladenen Gasen zu Schwierigkeiten führt und einen erheblichen Druckverlust mit sich bringt. Dies ist beispielsweise bei Rauchgasen aus industriellen Feuerungen der Fall, deren Temperaturen bei 800 bis 1200^{o}C liegen und die korrodierende Bestandteile wie Schwefel, Fluor und Chlor enthalten sowie bei Festbrennstoff-Feuerungen, beispielsweise Kohlenstaubfeuerungen, deren Rauchgase in erheblichem Maße mit Staub beladen sind. Gerade bei diesen Gasen ist jedoch im Hinblick auf deren Schadstoffgehalt eine Nachbehandlung zum Abscheiden der Schadstoffe unerläßlich.

So erfordern die Rauchgase stationärer industrieller Feuerungsanlagen im Hinblick auf die gesetzlichen Bestimmungen auch bei der Anwendung von Primärmaßnahmen zur Verminderung des Anfalls an Stickoxiden in aller Regel noch Sekundärmaßnahmen zum Abscheiden der im Rauchgas enthaltenen Stickoxide. Hierfür sind eine Reihe von Naßverfahren, bei denen es sich um Oxidations- oder Reduktions-Absorptionsverfahren oder um Oxidations-/Reduktionsverfahren handelt, oder auch Trockenverfahren zur katalytischen oder nichtkatalytischen Reduktion der Stickoxide bekannt. Die Naßverfahren und die katalytischen Verfahren sind jedoch infolge der für das Abscheiden der Stickoxide erforderlichen festen Einsatzstoffe bzw. Katalysatoren sehr aufwendig. Dies gilt nicht für die sogenannte Stufenverbrennung, die eine Aufteilung der Brennstoffzufuhr auf mindestens zwei verbrennungsstufen vorsieht, denen eine Ausbrandstufe nachgeschaltet ist. Die technische Anwendung erfordert dementsprechend mindestens drei Stufen, wobei die erste Stufe über-, d.h. mit Luftüberschuß, die zweite unter-, d.h. mit Luftmangel, und die dritte Stufe wieder überstöchiometrisch betrieben werden sollte. Die zweite brennstoffreiche Stufe kann dabei als NO-Reduktionsstufe betrachtet werden, in der das entstehende Kohlenmonoxid mit dem Stickstoffmonoxid zu unschädlichem Kohlendioxid und Stickstoff reagiert.

Das Maß der nichtkatalytischen Reduktion der Stickoxide mit Hilfe eines fluiden Reduktionsmittels hängt bei allen Verfahren im wesentlichen davon ab, inwieweit und wie schnell es gelingt, das Reduktionsmittel mit dem normalerweise schnellströmenden Rauchgas ohne allzu hohen apparativen Aufwand und/oder hohe Betriebskosten in einer möglichst kurzen Zone homogen zu vermischen.

Hiervon ausgehennd liegt der Erfindung die Aufgabe zugrunde, ein Verfahren zur Reduktion von in Rauchgasen von Feuerungsanlagen enthaltenen Stickoxiden zu schaffen, das bei geringem apparativem Aufwand und kurzer Mischstrecke ein durchgreifendes Vermischen eines Rauchgasstroms mit einem Reduktionsgasstrom geringerer Menge erlaubt.

Die Lösung dieser Aufgabe besteht darin, daß bei einem Verfahren der eingangs erwähnten Art erfindungsgemäß das Reduktionsgasgemisch, in den Hauptgasstrom mit einem Impuls beaufschlagt eingestrahlt wird. Im Hinblick auf ein möglichst durchgreifendes Durchmischen der Reaktionspartner sind die Teilgasströme mit einem besonders wirkungsvollen Drallimpuls versehen, wobei die theoretische Drallzahl das mit dem Düsenradius normierte Verhältnis von Drallimpulsstrom zu Axialimpulsstrom, das 0,4- bis 5-fache der kritischen Drallzahl, beispielsweise das 1- bis 2-fache, betragen kann. In dieselbe Richtung wirkt das Einstrahlen des Impulsstroms mit einem Winkel von 1° bis 80°, beispielsweise 15 bis 30°, gegen den Hauptstrom.

Bei einem derartigen Gegenstromeindüsen mit Hilfe von Dralldüsen wird die Mittengängigkeit des Reduktionsmittels im Hauptstrom mit der Folge abgebaut, daß sich eine weitgehend homogene Verteilung der Reaktionspartner einstellt.

Das Nebenstromgas kann auch mittels mehrerer Teilströme unterschiedlicher, einschließlich einander entgegengesetzter Strahlrichtung, beispielsweise in mehreren senkrecht zur Hauptstromachse verlaufenden Ebenen und winklig zueinander in den Hauptstrom eingestrahlt werden.

Das erfindungsgemäße Verfahren dient zur Reduktion von in Rauchgasen enthaltenen Stickoxiden mit Hilfe von Kohlenwasserstoffen als fluide Reduktionsmittel. Da die für die Umsetzung der Stickoxide erforderliche Reduktionsmittelmenge relativ gering ist, wird das Reduktionsmittel mit einer entsprechenden Rauchgasmenge, die demselben Prozeß weiter hinten entnommen wird, vorzugsweise als Gemisch, in den Rauchgasstrom eingestrahlt. Dies ist insofern von Vorteil, als damit praktisch nur geringfügige Mehrkosten verbunden sind und auch keine Folgestoffe anfallen, da es sich bei dem - gegebenenfalls bereits von Stickoxiden befreiten - Rauchgasanteil im Impulsstrom um einen reinen Massestrom mit überwiegend physikalischer Wirkung handelt.

Der Impulsstrom kann zur Erhöhung der Reaktionsgeschwindigkeit vorgewärmt sein. Bei einem getrennten Einstrahlen der Nebengasteilströme, beispielsweise mit Hilfe einer Vormischdüse, in der das zurückgeführte Rauchgas und der Kohlenwasserstoff vor dem Einstrahlen in den Hauptgasstrom vorgemischt werden, sollten der Massenstrom, der Austrittsimpuls und das Mischungsverhältnis relativ zu den entsprechenden Größen des Hauptgasstroms eingestellt werden.

Als besonders günstig haben sich ein Massenstromverhältnis Hauptgasstrom/Nebengasstrom je Düse von 20 bis 120, beispielsweise 60 bis 90, und ein Impulsstromverhältnis Hauptgasstrom/Nebengasstrom von 1 bis 10, beispielsweise 3 bis 6, ein Mischungsverhältnis Kohlenwasserstoff/Rauchgas von 1 : 5 bis 1 : 40, beispielsweise 1 : 10 bis 1 : 20, sowie beim Eindüsen eines Kohlenwasserstoffs, beispielsweise Erdgas, eine Hauptstromtemperatur von 700°C bis 1200°C, beispielsweise 1000°C bis 1100°C, erwiesen. Je nach Art des Reaktionsmittels kann die Hauptstromtemperatur jedoch auch wesentlich geringer sein.

Für das erfindungsgemäße Verfahren eignet sich insbesondere eine Vorrichtung, in der mindestens der größere Massenstrom mit einem Drallimpuls versehen wird. Insbesondere kann diese Vorrichtung aus einer Rauchgasteilstromrückführung, mehreren über den Umfang eines Rauchgaskanals verteilten, mit der Rauchgasteilstromrückführung verbundenen, eine Kohlenwasserstoffleitung aufweisenden und gegen den Rauchgasstrom im Rauchgaskanal mit einem Einstrahlwinkel von 1° bis 80° angeordneten Düsen sowie Sekundärdüsen und in den Düsen angeordneten Drallscheiben mit um einen Winkel von 10° bis 80° zur Rohrachse geneigten Axialschaufeln bestehen.

Die Düsen können in verschiedenen, senkrecht zur Kanalachse verlaufenden Ebenen, gegebenenfalls auch mit zumindest teilweise unterschiedlichem Neigungswinkel eingebaut sein.

Die Erfindung wird nachfolgend anhand von in der Zeichnung dargestellten Ausführungsbeispielen des näheren erläutert. In der Zeichnung zeigen:

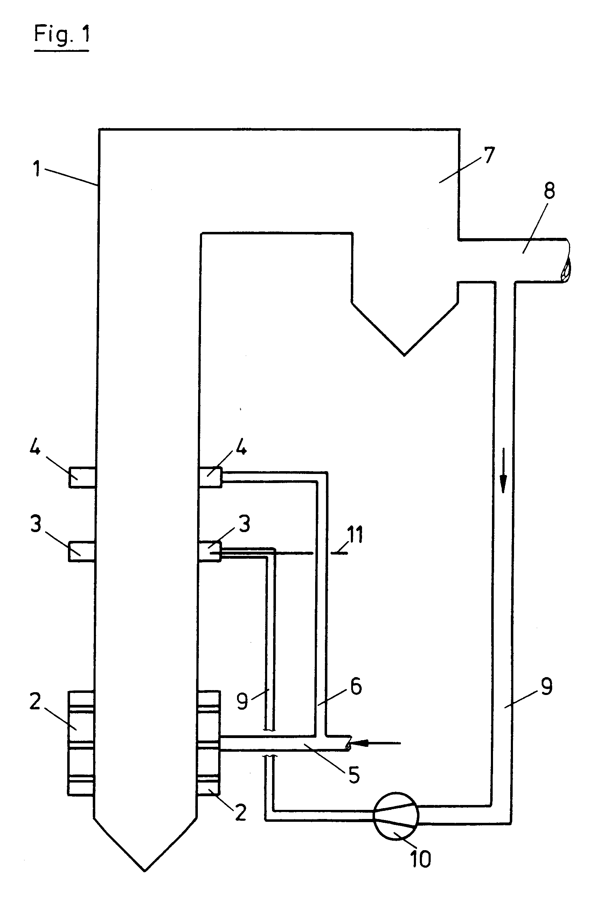

- Fig. 1: einen Kessel mit Stufenverbrennung,
- Fig. 2: einen axialen Längsschnitt durch den Rauchgaskanal des Kessels,

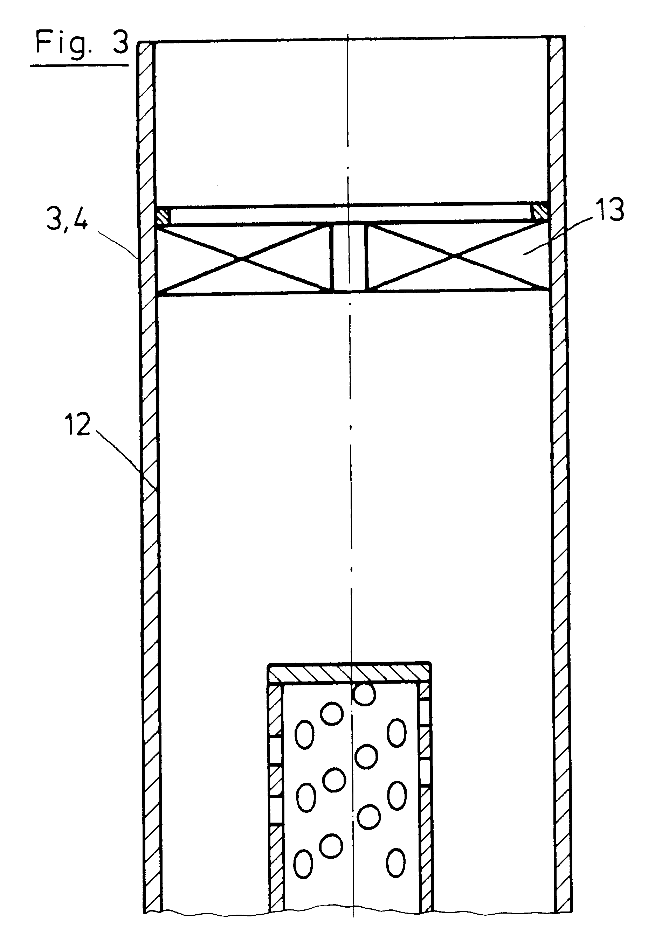

- Fig. 3: den schematischen Aufbau einer Impulsdralldüse,

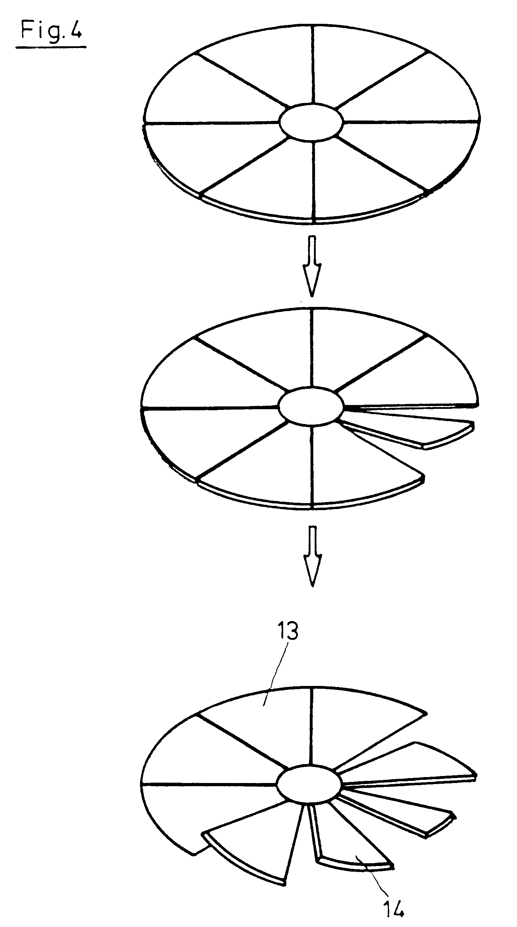

- Fig. 4: ein axiales Schaufelgitter (Drallscheibe) zur Erzeugung des Drallimpulses.

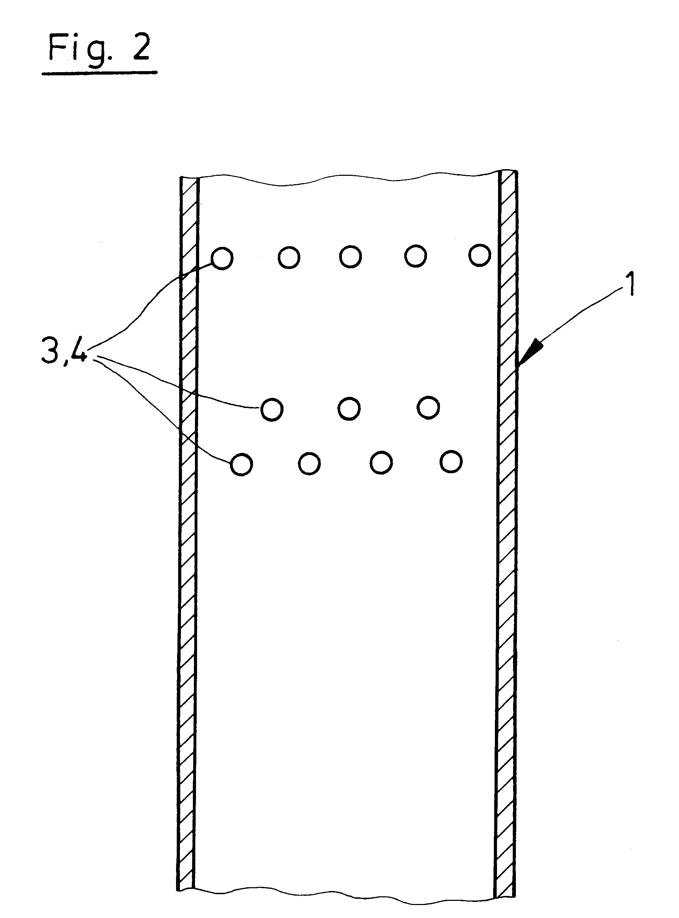

Der Kessel 1 besitzt eine Schmelzkammerfeuerung mit Stufenverbrennung, d.h. mit Hauptbrennern 2 und oberhalb angeordneten Impulsdralldüsen 3 als Zusatzbrenner. Die Hauptbrenner werden über eine gemeinsame Leitung 5 und die Sekundärluftdüsen 4, ebenfalls als Impulsdralldüsen ausgeführt, über Einzelleitungen 6 mit Luft versorgt. Vom zweiten Zug 7 des Kessels geht ein Rauchgaskanal 8 ab, durch den das Rauchgas zum Kamin gelangt. Aus dem Rauchgaskanal 8 heraus wird über ein Rauchgasgebläse 10 durch eine Rauchgasleitung 9 Rauchgas zu den Zusatzbrennern 3 zurückgeführt, um den Impuls von über eine Leitung 11 zugeführtem Kohlenwasserstoff zu verstärken. Die Impulsdralldüsen - Zusatzbrenner 3 und Sekundärluftdüsen 4 - sind in der aus Fig. 2 ersichtlichen Weise über den Umfang des Rauchgaskanals verteilt und können in mehreren senkrecht zur Kanalachse verlaufenden Ebenen angeordnet sein.

Die Düsen 3 und 4 bestehen aus einem Rohr 12, in das ein axiales Schaufelgitter (Drallscheibe) 13 eingebaut ist. Wenn wie im Fall der Zusatzbrenner 3 zwei Medien - hier rückgeführtes Abgas und ein Kohlenwasserstoff, z.B. Erdgas - eingestrahlt werden sollen, werden beide Medien vor der Drallscheibe vermischt und der gesamte Massenstrom verdrallt. Falls ein Vormischen aus betrieblichen Gründen nicht möglichst ist, sollte der größere Massenstrom verdrallt werden oder die Verdrallung sollte ohne Einbauten, z.B. durch tangentiales Einströmen in die Düse, realisiert werden.

Die Drallscheibe 13 kann aus einer einfachen Scheibe hergestellt sein, die einige Male, beispielsweise 8 bis 10 mal vom Rand aus bis nahe an die Mitte eingeschnitten ist. Die so entstandenen Segmente 14 werden aufgebogen bis der gewünschte Schaufelwinkel erreicht ist.

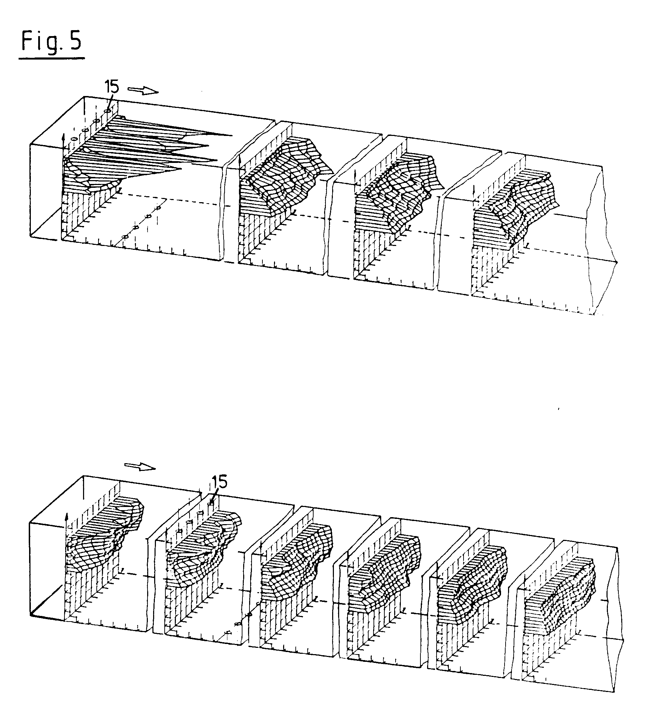

Fig. 5 zeigt die gemessene Konzentrationsverteilung des Nebenstrommediums in der Hauptströmung. Die obere Bildhälfte kennzeichnet den typischen Vermischungsverlauf eines Reduktionsmediums, das an der Aufgabestelle 15 mittels Injektordüsen in die Hauptströmung eingeblasen wird. Die untere Bildhälfte kennzeichnet den Vermischungsverlauf, der sich bei Anwendung des erfindungsgemäßen Verfahrens und der Impulsdralldüsen einstellt, und der schon stromaufwärts der Aufgabestelle relativ homogen über dem Querschnitt ist.

## Patentansprüche

1. Verfahren zur Reduktion von in Rauchgasen von Feuerungsanlagen enthaltenen Stickoxiden, bei dem ein Teilstrom der Rauchgase rückgeführt, mit Kohlenwasserstoffen als Reduktionsmittel gemischt und mit einem Drallimpuls versehen gegen den Rauchgasstrom mit einem Einstrahlwinkel von 1° bis 80° eingestrahlt wird.

2. Verfahren nach Anspruch 1, dadurch gekennzeichnet, daß der Querschnitt des Rauchgaskanals für den Hauptgasstrom 3 bis 5 m² beträgt.

3. Verfahren nach Anspruch 1 oder 2, dadurch gekennzeichnet, daß die theoretische Drallzahl, das mit dem Düsenradius normierte Verhältnis von Drallimpulsstrom zu Axialimpulsstrom, dem 0,4- bis 5-fachen der kritischen Drallzahl entspricht.

4. Verfahren nach einem der Ansprüche 1 bis 3, dadurch gekennzeichnet, daß mehrere Nebengasteilströme in den Hauptgasstrom eingestrahlt werden.

5. Verfahren nach Anspruch 4, dadurch gekennzeichnet, daß die Teilströme mit unterschiedlicher Strahlrichtung in den Hauptstrom eingestrahlt werden.

6. Verfahren nach Anspruch 4 oder 5, dadurch gekennzeichnet, daß die Strahlrichtungen mindestens zum Teil einander entgegengesetzt verlaufen.

7. Verfahren nach einem der Ansprüche 4 bis 6, dadurch gekennzeichnet, daß die Teilströme in einer oder in mehreren Ebenen eingestrahlt werden.

8. Verfahren nach einem der Ansprüche 1 bis 7, dadurch gekennzeichnet, daß der Nebengasstrom mit erhöhter Temperatur eingestrahlt wird.

9. Verfahren nach einem der Ansprüche 1 bis 8, dadurch gekennzeichnet, daß das Massenstromverhältnis Hauptgasstrom/Nebengasstrom je Düse 20 bis 120 beträgt.

10. Verfahren nach Anspruch 9, dadurch gekennzeichnet, daß das Massenstromverhältnis Hauptgasstrom/Nebengasstrom je Düse regelbar ist.

11. Verfahren nach einem der Ansprüche 1 bis 10, dadurch gekennzeichnet, daß das Impulsstromverhältnis Hauptgasstrom/Nebengasstrom je Düse 1 bis 10 beträgt.

12. Verfahren nach einem der Ansprüche 1 bis 11, dadurch gekennzeichnet, daß das Impulsstromverhältnis Hauptgasstrom/Nebengasstrom je Düse regelbar ist.

13. Verfahren nach einem der Ansprüche 1 bis 12, dadurch gekennzeichnet, daß das Mischungsverhältnis Kohlenwasserstoff/Rauchgas 1 : 5 bis 1 : 40 beträgt.

14. Verfahren nach Anspruch 13, dadurch gekennzeichnet, daß das Mischungsverhältnis Kohlenwasserstoff/Rauchgas regelbar ist.

15. Verfahren nach einem der Ansprüche 1 bis 14, dadurch gekennzeichnet, daß die Hauptgastemperatur 300°C bis 1200°C und/oder die Nebengastemperatur 100°C bis 400°C beträgt.

16. Vorrichtung zur Durchführung des Verfahrens nach den Ansprüchen 1 bis 15, gekennzeichnet durch eine Rauchgasteilstromrückführung (9), mehrere, über den Umfang eines Rauchgaskanals (1) verteilte, mit der Rauchgasteilstromrückführung (9) verbundene, eine Kohlenwasserstoffleitung (11) aufweisende, gegen den Rauchgasstrom im Rauchgaskanal (1) mit einem Einstrahlwinkel von 1° bis 80° angeordnete Düsen (3) sowie Sekundärdüsen (4) und in den Düsen (3, 4) angeordnete Drallscheiben (13) mit um einen Winkel von 10° bis 80° zur Rohrachse geneigte Axialschaufeln (14).

17. Vorrichtung nach Anspruch 16, dadurch gekennzeichnet, daß die Düsen (3, 4) in verschiedenen, senkrecht zur Kanalachse verlaufenden Ebenen angeordnet sind.

18. Vorrichtung nach Anspruch 16 oder 17, dadurch gekennzeichnet, daß die Gegenstrom-Neigungswinkel der Düsen (3, 4) bezüglich der Hauptströmungsrichtung zumindest teilweise unterschiedlich sind.

## Claims

1. Process for the reduction of nitrogen oxides contained in flue gases from furnace plants, wherein a sub-stream of the flue gases is returned, mixed with hydrocarbons as reducing agent, and injected, provided with a swirl momentum, counter to the flue gas stream at an injection angle of 1° to 80°.

2. Process according to claim 1, characterised in that the cross-section of the flue gas passage for the main gas stream is from 3 to 5 m².

3. Process according to claim 1 or claim 2, characterised in that the theoretical swirl number (the ratio of swirl momentum flow, normalised with the nozzle radius, to axial momentum flow) is from 0.4 to 5 times the critical swirl number.

4. Process according to any one of claims 1 to 3, characterised in that several auxiliary gas sub-streams are injected into the main gas stream.

5. Process according to claim 4, characterised in that the sub-streams are injected into the main stream with different directions of flow.

6. Process according to claim 5, characterised in that at least some of the directions of flow run counter to one another.

7. Process according to any one of claims 4 to 6, characterised in that the sub-streams are injected in one or more planes.

8. Process according to any one of claims 1 to 7, characterised in that the auxiliary gas stream is injected at an elevated temperature.

9. Process according to any one of claims 1 to 8, characterised in that the mass flow ratio (main gas stream to auxiliary gas stream) per nozzle is from 20 to 120.

10. Process according to claim 9, characterised in that the mass flow ratio (main gas stream to auxiliary gas stream) per nozzle is adjustable.

11. Process according to any one of claim 1 to 10, characterised in that the momentum flow ratio (main gas stream to auxiliary gas stream) per nozzle is from 1 to 10.

12. Process according to any one of claims 1 to 11, characterised in that the momentum flow ratio (main gas stream to auxiliary gas stream) per nozzle is adjustable.

13. Process according to any one of claims 1 to 12, characterised in that the mixture ratio of hydrocarbon to flue gas is from 1 : 5 to 1 : 40.

14. Process according to claim 13, characterised in that the mixture ratio of hydrocarbon to flue gas is adjustable.

15. Process according to any one of claims 1 to 14, characterised in that the main gas temperature is from 300°C to 1200°C and/or the auxiliary gas temperature is from 100°C to 400°C.

16. Apparatus for carrying out the process according to claims 1 to 15, characterised by a flue gas sub-stream return line (9), a plurality of nozzles (3) distributed around the periphery of a flue gas passage (1), connected to the flue gas sub-stream return line (9), provided with a hydrocarbon line (11) and set counter to the flue gas stream in the flue gas passage (1) at an angle of 1° to 80°, and of secondary nozzles (4), and by swirl plates (13) fitted in the nozzles (3, 4) and having axial vanes (14) inclined at an angle of 10° to 80° to the tube axis.

17. Apparatus according to claim 16, characterised in that the nozzles (3, 4) are arranged in various planes extending at right angles to the axis of the passage.

18. Apparatus according to claim 16 or claim 17, characterised in that at least some of the nozzles (3, 4) have different counterflow angles of inclination to the main flow direction.

## Revendications

1. Procédé de réduction des oxydes d'azote contenus dans les gaz de combustion d'installations de chauffage, dans lequel on injecte en retour à contre-courant dans le courant des gaz de combustion une partie du débit des gaz de combustion, mélangée avec des hydrocarbures en tant que produits de réduction, en conférant à cette partie de débit une impulsion tourbillonnaire avec un angle d'injection de 1° à 80°.

2. Procédé selon la revendication 1, caractérisé en ce que la section du conduit des gaz de combustion pour le courant de gaz principal est de 3 à 5 m².

3. Procédé sel on l'une ou l'autre des revendications 1 ou 2, caractérisé en ce que la vitesse tourbillonnaire théorique correspond à 0,4 à 5 fois la vitesse tourbillonnaire critique, dans le rapport normalisé vis-à-vis du rayon d'injecteur entre le courant d'impulsion tourbillonnaire et le courant d'impulsion axial.

4. Procédé selon l'une quelconque des revendications 1 à 3, caractérisé en ce que l'on injecte plusieurs courants partiels de gaz secondaire dans le courant de gaz principal.

5. Procédé selon la revendication 4, caractérisé en ce que les courants partiels sont injectés dans le courant principal sous différentes directions d'écoulement.

6. Procédé selon l'une ou l'autre des revendications 4 ou 5, caractérisé en ce que les directions d'injection sont au moins partiellement opposées les unes aux autres.

7. Procédé selon l'une quelconque des revendications 4 à 6, caractérisé en ce que les courants partiels sont injectés dans un ou plusieurs plans.

8. Procédé selon l'une quelconque des revendications 1 à 7, caractérisé en ce que le courant de gaz secondaire est injecté avec une température augmentée.

9. Procédé selon l'une quelconque des revendications 1 à 8, caractérisé en ce que le rapport en masse entre le courant de gaz principal et le courant de gaz secondaire est de 20 à 120 par injecteur.

10. Procédé selon la revendication 9, caractérisé en ce que le rapport en masse entre le courant de gaz principal et le courant de gaz secondaire est réglable pour chaque injecteur.

11. Procédé selon l'une quelconque des revendications 1 à 10, caractérisé en ce que le rapport d'impulsion entre le courant de gaz principal et le courant de gaz secondaire est de 1 à 10 par injecteur.

12. Procédé selon l'une quelconque des revendications 1 à 11, caractérisé en ce que le rapport d'impulsion entre le courant de gaz principal et le courant de gaz secondaire est réglable pour chaque injecteur.

13. Procédé selon l'une quelconque des revendications 1 à 12, caractérisé en ce que le rapport de mélange entre hydrocarbure et gaz de combustion est de 1:5 à 1:40.

14. Procédé selon la revendication 13, caractérisé en ce que le rapport de mélange entre hydrocarbure et gaz de combustion est réglable.

15. Procédé selon l'une quelconque des revendications 1 à 14, caractérisé en ce que la température du gaz principal est de 300°C à 1200°C et/ou en ce que la température du gaz secondaire est de 100°C à 400°C.

16. Appareil pour la mise en oeuvre du procédé selon les revendications 1 à 15, caractérisé en ce qu'il comprend une ligne (9) pour recyclage partiel des gaz de combustion, plusieurs injecteurs (3) et injecteurs secondaires (4) répartis sur la périphérie d'un conduit (1) pour les gaz de combustion, ces injecteurs (3, 4), agencés sous un angle d'injection de 1° à 80° contre le courant de gaz de combustion dans le conduit (1) des gaz de combustion, étant reliés avec la ligne (9) de recyclage partiel des gaz de combustion et étant pourvus d'un conduit (11) d'hydrocarbures; et l'appareil comprenant des disques tourbillonnaires (13), agencés dans les injecteurs (3, 4), avec des aubes axiales (14) inclinées sous un angle de 10° à 80° par rapport à l'axe des tubes.

17. Appareil selon la revendication 16, caractérisé en ce que les injecteurs (3, 4) sont agencés dans des plans différents orientés perpendiculairement à l'axe du conduit.

18. Appareil selon l'une ou l'autre des revendications 16 ou 17, caractérisé en ce que les angles d'inclinaison à contre-courant des injecteurs (3, 4) par rapport à la direction d'écoulement principale sont au moins partiellement différents.
